# EUROPEAN PATENT SPECIFICATION

(11) **EP 4 438 188 B1**
(45) Date of publication and mention of the grant of the patent: **18.03.2026**
(21) Application number: 23193041.3
(22) Date of filing: 23.08.2023
(51) Int. Cl.: B05C 1/08, B32B 37/00, B05C 5/02

(54) **DOUBLE-SIDED COATING APPARATUS**
DOPPELSEITIGE BESCHICHTUNGSVORRICHTUNG
APPAREIL DE REVÊTEMENT DOUBLE FACE

(30) Priority: 28.03.2023 CN 202310347540
(43) Date of publication of application: 02.10.2024
(73) Proprietor: Katop Automation Co., Ltd, 518118 Shenzhen City, Guangdong Province (CN)
(72) Inventor: ZHU, Gaowen, Shenzhen City, Guangdong Province, 518118 (CN); SHI, Wei, Shenzhen City, Guangdong Province, 518118 (CN); ZHOU, Yuwang, Shenzhen City, Guangdong Province, 518118 (CN); MING, Wenjian, Shenzhen City, Guangdong Province, 518118 (CN)
(74) Representative: DTS Patent- und Rechtsanwälte PartmbB

(56) References cited:
- CN-U- 204 503 472
- JP-B2- 6 742 856
- US-A1- 2018 345 310
- US-A1- 2023 052 155
- US-B2- 8 875 651

## Description

### TECHNICAL FIELD

The disclosure relates to the technical field of coating, in particular to a double-sided coating apparatus.

### BACKGROUND

The existing coating apparatus usually adopts a roll coating method. When it is applied to the double-sided coating, an A side of the foil is coated by an A side coating apparatus, followed by a B side of the foil being coated by a B side coating apparatus. However, as the slurry coated on both sides is still in a liquid state, the foil is prone to shake when it is transported to the next station after finishing the coating, which will affect the stability of the surface coating of the foil and reduce the coating quality.

JP 6742856B2 discloses a coating device that includes a back coating die, an adjusting roll, a tension detector, a position detector, and a control unit. The tension detector is used to detect the tension on both sides of a base material sheet in a width direction, while the position detector is used to detect changes in the positions of the edges on both sides of the base material sheet in the width direction. Based on the detection values from the tension detector and the position detector, the position of the adjusting roll is adjusted to eliminate slackness at the edges of the base material sheet and the tension difference on both sides in the width direction. The objective of this document is to enable stable and uniform coating thickness on one side of the base material sheet, regardless of the form of the coating, without causing defects in the base material sheet.

### SUMMARY

In order to overcome the shortcomings of the prior art and to ensure the coating quality, the disclosure provides a double-sided coating apparatus, which can provide a stable support for the coated foil and prevent it from shaking during transportation.

The technical scheme adopted by the disclosure to solve the technical problems is as follows:
a double-sided coating apparatus comprises a coating frame, wherein a plurality of rollers, a first coating mechanism and a second coating mechanism are sequentially arranged on the coating frame; the first coating mechanism comprises a first coating die and a first coating support roller; a gap exists between the first coating die and the first coating support roller for a foil to pass through; the second coating mechanism comprises a second coating die and a support assembly; the support assembly and the second coating die are sequentially arranged along the running direction of the foil; the support assembly comprises a supporting wire wound bar and an adjusting mechanism, wherein the adjusting mechanism can adjust the position of the supporting wire wound bar in the horizontal direction and the vertical direction, and the vertical height of the supporting wire wound bar is greater than that of the coating lip of the second coating die.

According to an embodiment, the periphery of the first coating support roller is provided with a coating press roller, the foil can pass between the coating press roller and the first coating support roller, and the coating press roller can press the foil against the surface of the first coating support roller.

According to an embodiment, the adjusting mechanism comprises a first adjusting mechanism, which comprises a first adjusting platform and a first height adjusting assembly arranged on the first adjusting platform, the first adjusting platform is provided with a first displacement adjusting assembly, and the first displacement adjusting assembly can adjust the distance between the supporting wire wound bar and the coating lip.

According to an embodiment, the first displacement adjusting assembly is arranged on both sides of the first adjusting platform, wherein one side of the first adjusting platform comprises a locking plate and a stop screw, and the locking plate is pressed and fixed on the lateral side of the first adjusting platform by the stop screw; and the other side of the first adjusting platform comprises a first adjusting ruler, a bolt and an adjusting ruler fixing seat, the adjusting ruler fixing seat is fixedly connected to the first adjusting platform, and the first adjusting ruler is pressed against the adjusting ruler fixing seat by the bolt.

According to an embodiment, the first height adjusting assembly comprises a lower dovetail groove and an upper dovetail groove embedded at the top of the lower dovetail groove, and the surface of the lower dovetail groove is provided with a guide inclined plane.

According to an embodiment, the first height adjusting assembly further comprises an adjusting nut, an adjusting screw and an adjusting handle, wherein a movable guide block and a fixed screw limit block are arranged in the groove of the lower dovetail groove, one end of the adjusting screw is connected to the adjusting handle, the other end of the adjusting screw is inserted into the lower dovetail groove and connected to the guide block, and the adjusting nut is arranged at the joint of the lower dovetail groove and the adjusting screw.

According to an embodiment, a first bearing seat is arranged at the top of the upper dovetail groove, two first bearings are arranged on the first bearing seat, and the supporting wire wound bar is arranged between the two first bearings.

According to an embodiment, the adjusting mechanism comprises a second adjusting mechanism, which is arranged at both ends of the supporting wire wound bar, and which comprises a second adjusting platform and a second height adjusting assembly arranged on the second adjusting platform, wherein the second adjusting platform is provided with a second displacement adjusting assembly, and the structure of the second displacement adjusting assembly is the same as that of the first displacement adjusting assembly.

According to an embodiment, the second height adjusting assembly comprises a spring, and a first adjusting plate and a second adjusting plate which are connected with two ends of the spring, a supporting plate is arranged between the first adjusting plate and the second adjusting plate, a rotating shaft is arranged on the supporting plate, the rotating shaft is movably connected with an adjusting block, the adjusting block can rotate around the rotating shaft, an adjusting column is arranged on the bottom surface of the second adjusting plate, the lateral surface of the supporting plate is provided with a second adjusting ruler, and the second adjusting ruler and the adjusting column abut against two opposite sides of the adjusting block.

According to an embodiment, a second bearing seat is arranged at the top of the second height adjusting assembly, a second bearing is arranged on the second bearing seat, and the end of the supporting wire wound bar is sleeved in the second bearing.

According to an embodiment, the adjusting mechanism comprises an air-floating supporting groove, which can form a high-density air film to support the supporting wire wound bar, and the position of the supporting wire wound bar can be adjusted by adjusting the amount of the air source delivered to the air-floating supporting groove.

According to an embodiment, there is also provided with a plurality of arc-shaped air-floating plates, wherein the first arc-shaped air-floating plate arranged in the running direction of foil is arranged above the coating lip, and the rest arc-shaped air-floating plates are arranged behind the coating lip in an up-and-down staggered manner.

The disclosure has the beneficial effects that:
it provides a double-sided coating apparatus, which is provided with a supporting assembly, which can provide stable support for the coated foil and prevent it from shaking during transportation, ensuring the quality of the coating.

### BRIEF DESCRIPTION OF THE DRAWINGS

The disclosure will be further explained with the attached drawings and embodiments.
FIG. 1 is an overall assembly schematic diagram of the present disclosure;
FIG. 2 is a schematic diagram of a second coating mechanism according to the first embodiment of the present disclosure;
FIG. 3 is a schematic view of the first adjusting mechanism according to the first embodiment of the present disclosure;
FIG. 4 is a schematic diagram of the first adjustment platform according to the first embodiment of the present disclosure;
FIG. 5 is a partial structure exploded view of the first adjusting mechanism according to the first embodiment of the present disclosure;
FIG. 6 is a schematic diagram of a second adjusting mechanism according to the first embodiment of the present disclosure;
FIG. 7 is an assembly schematic diagram according to the second embodiment of the present disclosure.

### DETAILED DESCRIPTION

In the following, the concept, specific structure and technical effects of the disclosure will be clearly and completely described with embodiments and drawings, so as to fully explain the purpose, characteristics and effects of the disclosure. Obviously, the described embodiment is only a part of the embodiment of the present disclosure. Based on the embodiment of the present disclosure, other embodiments obtained by those skilled in the art without creative labor are comprised in the scope of protection of the present disclosure. In addition, all the connecting/connection relationships involved in the disclosure do not mean that components are directly connected, but that a better connection structure between components can be formed by adding or reducing connection accessories according to specific implementation conditions. Various technical features in the disclosure can be combined interactively on the premise of not conflicting with each other.

### Embodiment 1:

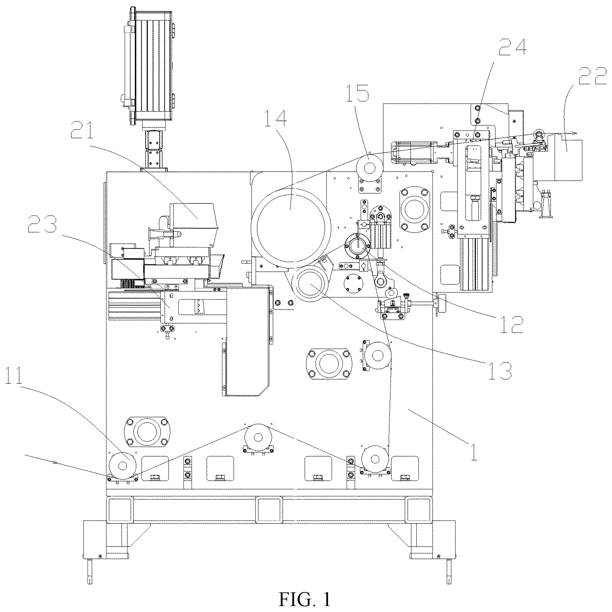

Referring to FIG. 1, the disclosure provides a double-sided coating apparatus. In order to realize the function of double-sided coating, the disclosure provides two groups of coating mechanisms to coat the A side and the B side of the foil respectively. The specific structure is described below.

The coating apparatus comprises a coating frame 1, and a plurality of rollers 11 are arranged on the coating frame 1, and the rollers 11 are used for guiding and conveying a foil. The coating frame 1 is also provided with a first coating mechanism and a second coating mechanism. The foil is transported to the first coating mechanism by the rollers 11 for coating an A side of the foil, and then transported to the second coating mechanism by the rollers 11 for coating a B side of the foil.

The first coating mechanism comprises a first coating die 21 and a first coating support roller 14. The coating end of the first coating die 21 is facing the surface of the first coating support roller 14, and a gap exists between the first coating die 21 and the first coating support roller 14 for a foil to pass through. The first coating support roller 14 can support the foil. When the foil is transported to the gap, the first coating die 21 applies coating to the A side of the foil.

The roller proximate to the first coating support roller 14 can be arranged as a coating press roller 13, and the foil passes between the coating press roller 13 and the first coating support roller 14. The coating press roller 13 can press the foil against the surface of the first coating support roller 14, so that the foil can be fully unfolded without wrinkling, which is more conducive to the coating.

The roller proximate to the coating press roller 13 can be arranged as a coating coding roller 12, which can be used to record the length of the foil by installing a multi-turn encoder at the roller end.

The first coating mechanism also comprises a first coating die adjusting mechanism 23, which is used to control the first coating die 21 to move to a designated position before starting coating. In actual coating, a driving apparatus such as an air cylinder or a servo motor can be used for controlling the first coating die, and the specific mechanism can be selected according to actual needs.

The roller between the second coating mechanism and the first coating support roller can be an adjusting roller, which is provided with eccentric bearing seats at both ends of the roller to adjust the height of both ends of the roller, so as to ensure the consistency of the tension of the foil in the transverse direction.

The second coating mechanism comprises a second coating die 22 and a second coating die adjusting mechanism 24. The second coating die adjusting mechanism 24 has the same function as the first coating die adjusting mechanism 23 described above, which is used for controlling the second coating die 22 to move to a designated position before starting coating, and the specific mechanism can be selected according to actual needs.

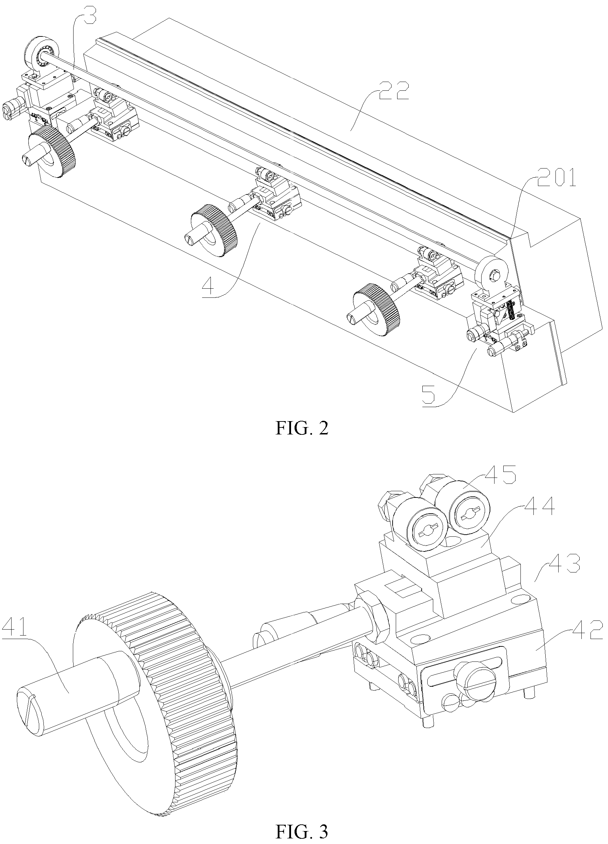

Referring to FIG. 2, the second coating mechanism comprises a second coating die 22, a coating lip 201 arranged on the second coating die 22, and a support assembly. The support assembly and the coating lip 201 are arranged in sequence along the running direction of the foil. During coating, when the foil is transported to the coating lip 201 through the support assembly, the foil will not rub against the coating lip 201 and the priming material on the surface of the foil will not be scratched due to the support of the support assembly. As the foil, supported by the support assembly, is under a stable state, the shaking of the foil will be reduced.

The support assembly comprises a supporting wire wound bar 3 and an adjusting mechanism. The adjusting mechanism can adjust the position of the supporting wire wound bar 3 in the horizontal direction and the vertical direction, and the vertical height of the supporting wire wound bar 3 is greater than that of the second coating die 22. When the foil is transported to the supporting wire wound bar 3, the supporting wire wound bar 3 can support the foil, and as the vertical height of the supporting wire wound bar 3 is greater than that of the second coating die 22, the foil will not contact with the supporting wire wound bar 3 when it passes through the second coating die 22, and the second coating die 22 directly extrudes the slurry on the B side of the foil to realize the coating for the second time.

The adjusting mechanism comprises a first adjusting mechanism 4 and a second adjusting mechanism 5, wherein a plurality of the first adjusting mechanisms 4 are arranged in the middle of the supporting wire wound bar 3, and the second adjusting mechanisms 5 are arranged at both ends of the supporting wire wound bar 3. By setting two groups of adjusting mechanisms, the straightness of the axis of the supporting wire wound bar 3 is ensured, and the flexible deformation of the supporting wire wound bar 3 in the axial direction is prevented under the influence of its own weight, so that the distance between the foil and the coating lip 201 is fixed, and the stability of the coating is ensured.

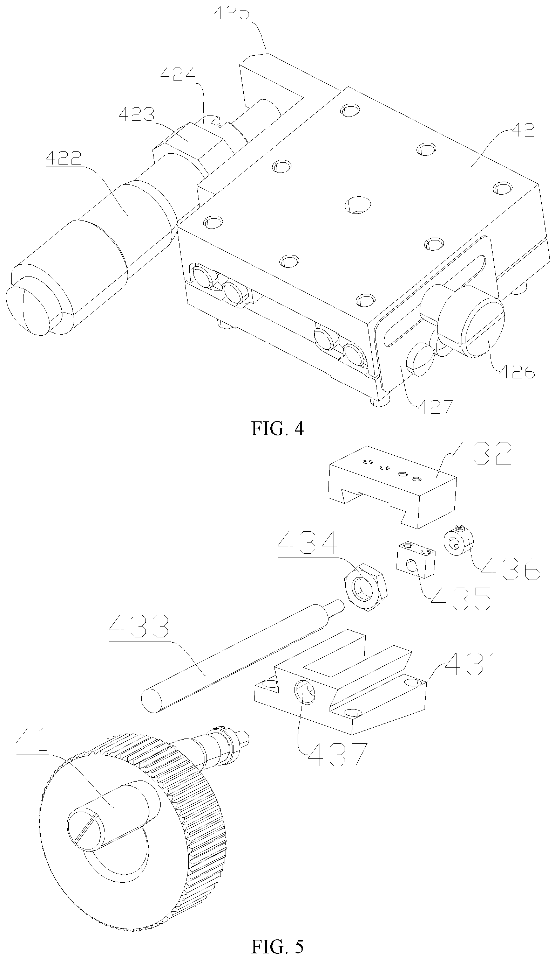

Referring to FIG. 3 to FIG. 5, the first adjusting mechanism comprises a first adjusting platform 42 and a first height adjusting assembly 43 arranged on the first adjusting platform, and the first adjusting platform 42 is provided with a first displacement adjusting assembly.

The first displacement adjusting assembly is arranged at two sides of the first adjusting platform 42. The first displacement adjusting assembly comprises a locking plate 427 and a stop screw 426 arranged on one side of the first adjusting platform 42, and the locking plate 427 is pressed and fixed on the lateral side of the first adjusting platform 42 by the stop screw 426. The first displacement adjusting assembly further comprises a first adjusting ruler 422, a bolt 423, a nut 424 and an adjusting ruler fixing seat 425 arranged on the other side of the first adjusting platform 42, wherein the adjusting ruler fixing seat 425 is fixedly connected to the first adjusting platform 42, and the bolt 423 presses the first adjusting ruler 422 against the adjusting ruler fixing seat 425. The distance between the first adjusting platform 42 and the coating lip 201 can be adjusted by the first adjusting ruler 422, which can be a micrometer.

The first height adjusting assembly 43 comprises a lower dovetail groove 431 and an upper dovetail groove 432 embedded at the top of the lower dovetail groove 431. The surface of the lower dovetail groove 431 is provided with a guide inclined plane, so that the height of the upper dovetail groove 432 can be adjusted when the upper dovetail groove 432 slides along the lower dovetail groove 431.

The first height adjusting assembly also comprises an adjusting nut 434, an adjusting screw 433 and an adjusting handle 41. One end of the lower dovetail groove 431 is provided with a mounting hole 437, and a movable guide block 435 and a fixed screw limit block 436 are arranged in the groove of the lower dovetail groove 431. One end of the adjusting screw 433 is connected with the adjusting handle 41, and the other end of the adjusting screw 433 is inserted into the mounting hole 437 and the guide block 435, and the adjusting screw is fixed by the adjusting nut. The top of the guide block is fixedly connected with the upper dovetail groove, and the screw limit block 436 is used for limiting the position of the adjusting screw 433 in the lower dovetail groove 431.

The top of the upper dovetail groove 432 is provided with a first bearing seat 44, and the first bearing seat 44 is provided with two first bearings 45. The supporting wire wound bar 3 is arranged between the two first bearings 45, and the two first bearings 45 can provide a V-shaped support force for the supporting wire wound bar 3, enhance the accuracy of the supporting wire wound bar 3, effectively control the movement of the supporting wire wound bar 3 during coating, and improve the stability of coating, thereby improving the coating quality.

In this embodiment, the first adjusting mechanism is provided with three groups, which are respectively arranged at the two ends and the middle of the supporting wire wound bar 3. During coating, by rotating the adjusting handle, the adjusting screw can be controlled to drive the guide block to slide in the lower dovetail groove and drive the upper dovetail groove to move along the guide inclined plane on the surface of the lower dovetail groove, so as to further realize the adjustment of the height of the first bearing and the distance between the foil and the coating lip, correct the flexible deformation of the supporting wire wound bar 3 due to gravity, and maintain the straightness of the supporting wire wound bar 3, so that the supporting wire wound bar 3 can be in good contact with the foil. And such arrangement is suitable for applying to coating lips with different gaps.

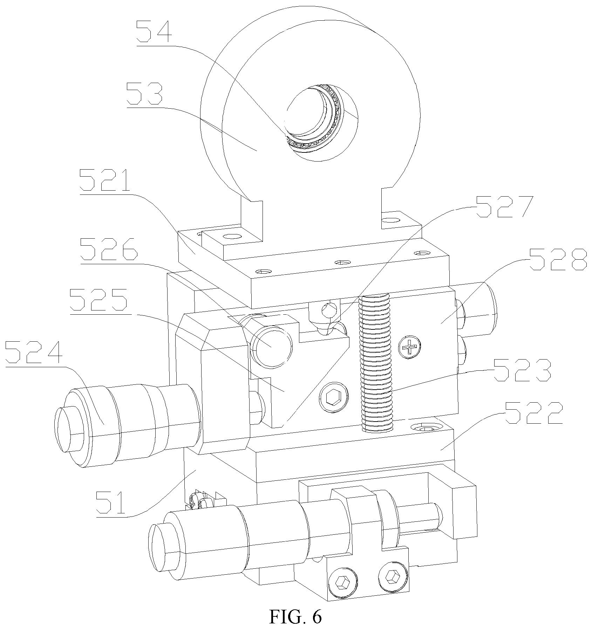

Referring to FIG. 6, the second adjusting mechanism 5 comprises a second adjusting platform 51 and a second height adjusting assembly arranged on the second adjusting platform 51. The structure of the second adjusting platform 51 is the same as that of the first adjusting platform 42, and both sides of the second adjusting platform 51 are also correspondingly provided with a displacement adjusting assembly, the same will not be repeatedly described.

A second bearing seat 53 is arranged above the second height adjusting assembly, and a second bearing 54 is arranged on the second bearing seat 53, and the end of the supporting wire wound bar 3 is sleeved in the second bearing 54. With the support of the first bearing 45 and the second bearing 54 at both ends, the supporting wire wound bar 3 can synchronously rotate along with the moving direction of the foil during transportation, so as to ensure that the foil and the supporting wire wound bar 3 have no relative sliding, which effectively protects the priming material of the foil.

The second height adjusting assembly comprises a first adjusting plate 521 and a second adjusting plate 522, wherein a supporting plate 528 is arranged on the second adjusting plate 522, a spring 523 is arranged between the first adjusting plate 521 and the second adjusting plate 522, an adjusting column 527 is arranged at the bottom of the first adjusting plate 521, a rotating shaft 526 is arranged on the supporting plate 528, and the rotating shaft 526 is movably connected with an adjusting block 525, which can rotate around the rotating shaft 526.

The end of the support plate 528 is provided with a second adjusting ruler 524, the end of the second adjusting ruler 524 abuts against one surface of the adjusting block 525, and the adjusting column 527 abuts against the other surface of the adjusting block 525. When the end of the second adjusting ruler 524 is extended, it can rotate against the adjusting block 525, and act on the adjusting column 527 to change the height of the first adjusting plate 521. When the second adjusting ruler 524 is retracted, the adjusting block 525 can be driven to return to the original position under the elastic return of the spring 523.

### Embodiment 2:

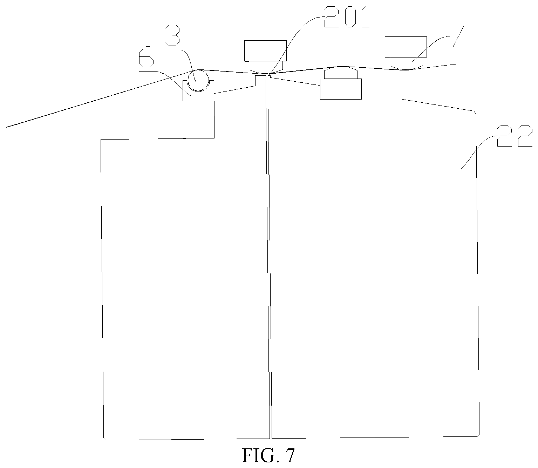

Referring to FIG. 7, in this embodiment, the first adjusting mechanism and the second adjusting mechanism in Embodiment 1 are replaced by an air-floating supporting groove 6. A high-density air film can be formed by the air-floating supporting groove 6. The air film can overcome the flexible deformation of the supporting wire wound bar 3 due to its own weight, and can be adjusted by adjusting the amount of the air source delivered to the air-floating supporting groove 6, so as to further adjust the position of the supporting wire wound bar 3.

In this embodiment, there is also provided with a plurality of arc-shaped air-floating plates 7. The first arc-shaped air-floating plate 7 arranged in the running direction of the foil is arranged above the coating lip 201, and the rest of the arc-shaped air-floating plates 7 are arranged behind the coating lip 201 in an up-and-down staggered manner. The arc-shaped air-floating plates 7 can support the coated foil in suspension, so as to avoid direct contact between the foil and the coating lip 201, which ensures the coating quality.

The above is a detailed description of the preferred implementation of the present disclosure, but the disclosure is not limited to the embodiment, and those skilled in the art can make various equivalent deformations or within the scope defined by the claims of this disclosure.

## Claims

1. A double-sided coating apparatus, comprising a coating frame (1), wherein a plurality of rollers (11), a first coating mechanism and a second coating mechanism are sequentially arranged on the coating frame (1), the first coating mechanism comprises a first coating die (21) and a first coating support roller (14), a gap exists between the first coating die (21) and the first coating support roller (14) for a foil to pass through, the second coating mechanism comprises a second coating die (22) and a support assembly, the support assembly and the second coating die (22) are sequentially arranged along the running direction of the foil, the support assembly comprises a supporting wire wound bar (3) and an adjusting mechanism, the adjusting mechanism can adjust the position of the supporting wire wound bar (3) in the horizontal direction and the vertical direction, and the vertical height of the supporting wire wound bar (3) is greater than that of a coating lip (201) of the second coating die (22), **characterized in that** the adjusting mechanism comprises a first adjusting mechanism (4), which comprises a first adjusting platform (42) and a first height adjusting assembly (43) arranged on the first adjusting platform (42), the first adjusting platform (42) is provided with a first displacement adjusting assembly, and the first displacement adjusting assembly can adjust the distance between the supporting wire wound bar (3) and the coating lip (201).

2. The double-sided coating apparatus according to claim 1, **characterized in that** a coating press roller (13) is arranged around the first coating support roller (14), the foil can pass between the coating press roller (13) and the first coating support roller (14), and the coating press roller (13) can press the foil against the surface of the first coating support roller (14).

3. The double-sided coating apparatus according to claim 1, **characterized in that** the first displacement adjusting assembly is arranged on two sides of the first adjusting platform (42), wherein one side of the first adjusting platform comprises a locking plate (427) and a stop screw (426), and the locking plate (427) is pressed and fixed on the side of the first adjusting platform (42) by the stop screw (426), and the other side of the first adjusting platform (42) comprises a first adjusting ruler (422), a bolt (423) and an adjusting ruler fixing seat (425), the adjusting ruler fixing seat (425) is fixedly connected to the first adjusting platform (42), and the first adjusting ruler (422) is pressed against the adjusting ruler fixing seat (425) by the bolt (423).

4. The double-sided coating apparatus according to claim 1, **characterized in that** the first height adjusting assembly (43) comprises a lower dovetail groove (431) and an upper dovetail groove (432) embedded at the top of the lower dovetail groove (431), and the surface of the lower dovetail groove (431) is provided with a guide inclined plane.

5. The double-sided coating apparatus according to claim 4, **characterized in that** the first height adjusting assembly (43) further comprises an adjusting nut (434), an adjusting screw (433) and an adjusting handle (41), wherein a movable guide block (435) and a fixed screw limit block (436) are arranged in the groove of the lower dovetail groove (431), one end of the adjusting screw (433) is connected to the adjusting handle (41), the other end of the adjusting screw (433) is inserted into the lower dovetail groove (431) and connected to the guide block (435), and the adjusting nut (434) is arranged at the joint of the lower dovetail groove (431) and the adjusting screw (433).

6. The double-sided coating apparatus according to claim 4, **characterized in that** a first bearing seat (44) is arranged at the top of the upper dovetail groove (432), two first bearings (45) are arranged on the first bearing seat (44), and the supporting wire wound bar (3) is arranged between the two first bearings (45).

7. The double-sided coating apparatus according to claim 1, **characterized in that** the adjusting mechanism comprises a second adjusting mechanism (5), which is arranged at both ends of the supporting wire wound bar (3), and which comprises a second adjusting platform (51) and a second height adjusting assembly arranged on the second adjusting platform (51), the second adjusting platform (51) is provided with a second displacement adjusting assembly, and the structure of the second displacement adjusting assembly is the same as that of the first displacement adjusting assembly.

8. The double-sided coating apparatus according to claim 7, **characterized in that** the second height adjusting assembly comprises a spring (523), and a first adjusting plate (521) and a second adjusting plate (522) which are connected with both ends of the spring (523), a supporting plate (528) is arranged between the first adjusting plate (521) and the second adjusting plate (522), a rotating shaft (526) is arranged on the supporting plate (528), an adjusting block (525) is movably connected with the rotating shaft (526), the adjusting block (525) can rotate around the rotating shaft (526), an adjusting column (527) is arranged on the bottom surface of the second adjusting plate (522), the lateral surface of the supporting plate (528) is provided with a second adjusting ruler (524), and the second adjusting ruler (524) and the adjusting column (527) abut against two opposite sides of the adjusting block (525).

9. The double-sided coating apparatus according to claim 7, **characterized in that** a second bearing seat (53) is arranged at the top of the second height adjusting assembly, a second bearing (54) is arranged on the second bearing seat (53), and the end part of the supporting wire wound bar (3) is sleeved in the second bearing (54).

10. The double-sided coating apparatus according to claim 1, **characterized in that** the adjusting mechanism comprises an air-floating supporting groove (6), which can form a high-density air film to support the supporting wire wound bar (3), and the position of the supporting wire wound bar (3) can be adjusted by adjusting the amount of the air source delivered to the air-floating supporting groove (6).

11. The double-sided coating apparatus according to claim 10, **characterized by** further comprising a plurality of arc-shaped air-floating plates (7), wherein the first arc-shaped air-floating plate (7) arranged in the running direction of the foil is arranged above the coating lip (201), and the rest of the arc-shaped air-floating plates (7) are arranged behind the coating lip (201) in an up-and-down staggered manner.

## Patentansprüche

1. Doppelseitige Beschichtungsanlage, umfassend einen Beschichtungsrahmen (1), wobei auf dem Beschichtungsrahmen (1) mehrere Walzen (11), ein erster Beschichtungsmechanismus und ein zweiter Beschichtungsmechanismus nacheinander angeordnet sind, wobei der erste Beschichtungsmechanismus eine erste Beschichtungsdüse (21) und eine erste Beschichtungsstützwalze (14) umfasst, wobei zwischen der ersten Beschichtungsdüse (21) und der ersten Beschichtungsstützwalze (14) ein Spalt zum Durchführen einer Folie vorgesehen ist, wobei der zweite Beschichtungsmechanismus eine zweite Beschichtungsdüse (22) und eine Stützanordnung umfasst, wobei die Stützanordnung und die zweite Beschichtungsdüse (22) entlang der Laufrichtung der Folie nacheinander angeordnet sind, wobei die Stützanordnung eine Stützstange (3) und einen Einstellmechanismus umfasst, wobei der Einstellmechanismus die Position der Stützstange (3) in horizontaler Richtung und in vertikaler Richtung einstellen kann, und wobei die vertikale Höhe der Stützstange (3) größer ist als diejenige einer Beschichtungslippe (201) der zweiten Beschichtungsdüse (22), **dadurch gekennzeichnet, dass** der Einstellmechanismus einen ersten Einstellmechanismus (4) umfasst, welcher eine erste Einstellplattform (42) und eine auf der ersten Einstellplattform (42) angeordnete erste Höhenverstelleinheit (43) umfasst, wobei die erste Einstellplattform (42) mit einer ersten Verschiebeverstelleinheit versehen ist, und wobei die erste Verschiebeverstelleinheit den Abstand zwischen der Stützstange (3) und der Beschichtungslippe (201) einstellen kann.

2. Doppelseitige Beschichtungsanlage nach Anspruch 1, **dadurch gekennzeichnet, dass** eine Beschichtungsdruckwalze (13) um die erste Beschichtungsstützwalze (14) herum angeordnet ist, wobei die Folie zwischen der Beschichtungsdruckwalze (13) und der ersten Beschichtungsstützwalze (14) hindurchgeführt werden kann und die Beschichtungsdruckwalze (13) die Folie gegen die Oberfläche der ersten Beschichtungsstützwalze (14) pressen kann.

3. Doppelseitige Beschichtungsanlage nach Anspruch 1, **dadurch gekennzeichnet, dass** die erste Verschiebeverstelleinheit an beiden Seiten der ersten Einstellplattform (42) angeordnet ist, wobei eine Seite der ersten Einstellplattform eine Verriegelungsplatte (427) und eine Anschlagschraube (426) umfasst, und wobei die Verriegelungsplatte (427) durch die Anschlagschraube (426) an der Seite der ersten Einstellplattform (42) angepresst und fixiert ist, und wobei die andere Seite der ersten Einstellplattform (42) ein erstes Einstelllineal (422), einen Bolzen (423) und einen Einstelllineal-Befestigungssitz (425) umfasst, wobei der Einstelllineal-Befestigungssitz (425) fest mit der ersten Einstellplattform (42) verbunden ist, und wobei das erste Einstelllineal (422) durch den Bolzen (423) gegen den Einstelllineal-Befestigungssitz (425) gepresst ist.

4. Doppelseitige Beschichtungsanlage nach Anspruch 1, **dadurch gekennzeichnet, dass** die erste Höhenverstelleinheit (43) eine untere Schwalbenschwanznut (431) und eine obere Schwalbenschwanznut (432) umfasst, die in die obere Seite der unteren Schwalbenschwanznut (431) eingebettet ist, und die Oberfläche der unteren Schwalbenschwanznut (431) mit einer Führungsschräge versehen ist.

5. Doppelseitige Beschichtungsanlage nach Anspruch 4, **dadurch gekennzeichnet, dass** die erste Höhenverstelleinheit (43) ferner eine Einstellmutter (434), eine Einstellschraube (433) und einen Einstellgriff (41) umfasst, wobei in der Nut der unteren Schwalbenschwanznut (431) ein beweglicher Führungsblock (435) und ein fester Schrauben-Begrenzungsblock (436) angeordnet sind, wobei ein Ende der Einstellschraube (433) mit dem Einstellgriff (41) verbunden ist, das andere Ende der Einstellschraube (433) in die untere Schwalbenschwanznut (431) eingeführt ist und mit dem Führungsblock (435) verbunden ist, und wobei die Einstellmutter (434) an der Verbindungsstelle zwischen der unteren Schwalbenschwanznut (431) und der Einstellschraube (433) angeordnet ist.

6. Doppelseitige Beschichtungsanlage nach Anspruch 4, **dadurch gekennzeichnet, dass** an der Oberseite der oberen Schwalbenschwanznut (432) ein erster Lagersitz (44) angeordnet ist, wobei auf dem ersten Lagersitz (44) zwei erste Lager (45) angeordnet sind, und wobei die Stützstange (3) zwischen den beiden ersten Lagern (45) angeordnet ist.

7. Doppelseitige Beschichtungsanlage nach Anspruch 1, **dadurch gekennzeichnet, dass** der Einstellmechanismus ferner einen zweiten Einstellmechanismus (5) umfasst, welcher an beiden Enden der Stützstange (3) angeordnet ist und eine zweite Einstellplattform (51) sowie eine auf der zweiten Einstellplattform (51) angeordnete zweite Höhenverstelleinheit umfasst, wobei die zweite Einstellplattform (51) mit einer zweiten Verschiebeverstelleinheit versehen ist, und wobei die Struktur der zweiten Verschiebeverstelleinheit mit der der ersten Verschiebeverstelleinheit übereinstimmt.

8. Doppelseitige Beschichtungsanlage nach Anspruch 7, **dadurch gekennzeichnet, dass** die zweite Höhenverstelleinheit eine Feder (523) sowie eine erste Einstellplatte (521) und eine zweite Einstellplatte (522) umfasst, welche mit den beiden Enden der Feder (523) verbunden sind, wobei zwischen der ersten Einstellplatte (521) und der zweiten Einstellplatte (522) eine Stützplatte (528) angeordnet ist, wobei auf der Stützplatte (528) eine Drehwelle (526) angeordnet ist, wobei ein Einstellblock (525) beweglich mit der Drehwelle (526) verbunden ist und um die Drehwelle (526) rotieren kann, wobei an der Unterseite der zweiten Einstellplatte (522) eine Einstellsäule (527) angeordnet ist, und wobei an der Seitenfläche der Stützplatte (528) ein zweites Einstelllineal (524) vorgesehen ist, wobei das zweite Einstelllineal (524) und die Einstellsäule (527) an zwei gegenüberliegenden Seiten des Einstellblocks (525) anliegen.

9. Doppelseitige Beschichtungsanlage nach Anspruch 7, **dadurch gekennzeichnet, dass** an der Oberseite der zweiten Höhenverstelleinheit ein zweiter Lagersitz (53) angeordnet ist, wobei auf dem zweiten Lagersitz (53) ein zweites Lager (54) angeordnet ist, und wobei das Endteil der Stützstange (3) in das zweite Lager (54) gelagert ist.

10. Doppelseitige Beschichtungsanlage nach Anspruch 1, **dadurch gekennzeichnet, dass** der Einstellmechanismus eine Luftlager-Stützrinne (6) umfasst, die einen hochdichten Luftfilm zur Lagerung der Stützstange (3) bilden kann, und wobei die Position der Stützstange (3) durch Einstellen der Menge der der Luftlager-Stützrinne (6) zugeführten Luftquelle eingestellt werden kann.

11. Doppelseitige Beschichtungsanlage nach Anspruch 10, **dadurch gekennzeichnet, dass** sie ferner mehrere bogenförmige Luftschwebeplatten (7) umfasst,
wobei die erste in der Laufrichtung der Folie angeordnete bogenförmige Luftschwebeplatte (7) oberhalb der Beschichtungslippe (201) angeordnet ist, und wobei die übrigen bogenförmigen Luftschwebeplatten (7) hinter der Beschichtungslippe (201) in einer höhenversetzten Anordnung angeordnet sind.

## Revendications

1. Appareil de revêtement double face, comprenant un châssis de revêtement (1), dans lequel une pluralité de rouleaux (11), un premier mécanisme de revêtement et un second mécanisme de revêtement sont agencés de manière séquentielle sur le châssis de revêtement (1) ; le premier mécanisme de revêtement comprend une première filière de revêtement (21) et un premier rouleau de support de revêtement (14) ; un espace existe entre la première filière de revêtement (21) et le premier rouleau de support de revêtement (14) pour le passage d'une feuille ; le second mécanisme de revêtement comprend une seconde filière de revêtement (22) et un ensemble de support ; l'ensemble de support et la seconde filière de revêtement (22) sont agencés de manière séquentielle le long de la direction de déplacement de la feuille ; l'ensemble de support comprend une barre de support (3) enroulée de fil et un mécanisme de réglage ; le mécanisme de réglage peut régler la position de la barre de support (3) enroulée de fil dans la direction horizontale et la direction verticale, et la hauteur verticale de la barre de support (3) enroulée de fil est supérieure à celle d'une lèvre de revêtement (201) de la seconde filière de revêtement (22), **caractérisé en ce que** le mécanisme de réglage comprend un premier mécanisme de réglage (4), qui comprend une première plate-forme de réglage (42) et un premier ensemble de réglage de hauteur (43) agencé sur la première plate-forme de réglage (42), la première plate-forme de réglage (42) est pourvue d'un premier ensemble de réglage de déplacement, et le premier ensemble de réglage de déplacement peut régler la distance entre la barre de support (3) enroulée de fil et la lèvre de revêtement (201).

2. Appareil de revêtement double face selon la revendication 1, **caractérisé en ce qu'**un rouleau de presse de revêtement (13) est agencé autour du premier rouleau de support de revêtement (14) ; la feuille peut passer entre le rouleau de presse de revêtement (13) et le premier rouleau de support de revêtement (14), et le rouleau de presse de revêtement (13) peut presser la feuille contre la surface du premier rouleau de support de revêtement (14).

3. Appareil de revêtement double face selon la revendication 1, **caractérisé en ce que** le premier ensemble de réglage de déplacement est agencé sur les deux côtés de la première plate-forme de réglage (42), dans lequel un côté de la première plate-forme de réglage comprend une plaque de verrouillage (427) et une vis d'arrêt (426), et la plaque de verrouillage (427) est pressée et fixée sur le côté de la première plate-forme de réglage (42) par la vis d'arrêt (426), et l'autre côté de la première plate-forme de réglage (42) comprend une première règle de réglage (422), un boulon (423) et un siège de fixation (425) de règle de réglage, le siège de fixation (425) de règle de réglage est relié de manière fixe à la première plate-forme de réglage (42), et la première règle de réglage (422) est pressée contre le siège de fixation de règle de réglage (425) par le boulon (423).

4. Appareil de revêtement double face selon la revendication 1, **caractérisé en ce que** le premier ensemble de réglage de hauteur (43) comprend une rainure (431) en queue d'aronde inférieure et une rainure (432) en queue d'aronde supérieure encastrée au sommet de la rainure (431) en queue d'aronde inférieure, et la surface de la rainure (431) en queue d'aronde inférieure est pourvue d'un plan incliné de guidage.

5. Appareil de revêtement double face selon la revendication 4, **caractérisé en ce que** le premier ensemble de réglage de hauteur (43) comprend en outre un écrou de réglage (434), une vis de réglage (433) et une poignée de réglage (41), dans lequel un bloc de guidage mobile (435) et un bloc de fin de course de vis fixe (436) sont agencés dans la rainure de la rainure (431) en queue d'aronde inférieure ; une extrémité de la vis de réglage (433) est reliée à la poignée de réglage (41), l'autre extrémité de la vis de réglage (433) est insérée dans la rainure (431) en queue d'aronde inférieure et reliée au bloc de guidage (435), et l'écrou de réglage (434) est agencé au niveau du joint de la rainure (431) en queue d'aronde inférieure et de la vis de réglage (433).

6. Appareil de revêtement double face selon la revendication 4, **caractérisé en ce qu'**un premier siège de palier (44) est agencé au sommet de la rainure (432) en queue d'aronde supérieure, deux premiers paliers (45) sont agencés sur le premier siège de palier (44), et la barre de support (3) enroulée de fil est agencée entre les deux premiers paliers (45).

7. Appareil de revêtement double face selon la revendication 1, **caractérisé en ce que** le mécanisme de réglage comprend un second mécanisme de réglage (5), qui est agencé aux deux extrémités de la barre de support (3) enroulée de fil, et qui comprend une seconde plate-forme de réglage (51) et un second ensemble de réglage de hauteur agencé sur la seconde plate-forme de réglage (51) ; la seconde plate-forme de réglage (51) est pourvue d'un second ensemble de réglage de déplacement, et la structure du second ensemble de réglage de déplacement est la même que celle du premier ensemble de réglage de déplacement.

8. Appareil de revêtement double face selon la revendication 7, **caractérisé en ce que** le second ensemble de réglage en hauteur comprend un ressort (523), et une première plaque de réglage (521) et une seconde plaque de réglage (522) qui sont reliées aux deux extrémités du ressort (523) ; une plaque de support (528) est agencée entre la première plaque de réglage (521) et la seconde plaque de réglage (522), un arbre rotatif (526) est agencé sur la plaque de support (528), un bloc de réglage (525) est relié de manière mobile à l'arbre rotatif (526) ; le bloc de réglage (525) peut tourner autour de l'arbre rotatif (526), une colonne de réglage (527) est agencée sur la surface inférieure de la seconde plaque de réglage (522) ; la surface latérale de la plaque de support (528) est munie d'une seconde règle de réglage (524), et la seconde règle de réglage (524) et la colonne de réglage (527) butent contre deux côtés opposés du bloc de réglage (525).

9. Appareil de revêtement double face selon la revendication 7, **caractérisé en ce qu'**un second siège de palier (53) est agencé au sommet du second ensemble de réglage de hauteur, un second palier (54) est agencé sur le second siège de palier (53), et la partie d'extrémité de la barre de support (3) enroulée de fil est manchonnée dans le second palier (54).

10. Appareil de revêtement double face selon la revendication 1, **caractérisé en ce que** le mécanisme de réglage comprend une rainure de support flottant à air (6), qui peut former un film d'air à haute densité pour supporter la barre de support (3) enroulée de fil, et la position de la barre de support (3) enroulée de fil peut être réglée en réglant la quantité de la source d'air fournie à la rainure de support flottant à air (6).

11. Appareil de revêtement double face selon la revendication 10, **caractérisé en ce qu'**il comprend en outre une pluralité de plaques flottantes à air (7) en forme d'arc, dans lequel la première plaque flottante à air (7) en forme d'arc agencée dans la direction de déplacement de la feuille est agencée au-dessus de la lèvre de revêtement (201), et le reste des plaques flottantes à air (7) en forme d'arc est agencé derrière la lèvre de revêtement (201) de manière décalée vers le haut et vers le bas.
